# EUROPÄISCHE PATENTSCHRIFT

(11) **EP 3 480 004 B1**
(45) Veröffentlichungstag und Bekanntmachung des Hinweises auf die Patenterteilung: **03.09.2025**
(21) Anmeldenummer: 18185969.5
(22) Anmeldetag: 27.07.2018
(51) Int. Cl.: B30B 11/08, B30B 15/32, B65B 35/24, B65G 47/84, B65B 35/26, B65B 63/02

(54) **VERFAHREN UND EINRICHTUNG ZUM TRANSPORT VON KOMPRIMATEN**
METHOD AND DEVICE FOR TRANSPORTING COMPRIMATES
PROCÉDÉ ET DISPOSITIF DE TRANSPORT DE COMPRIMÉS

(30) Priorität: 07.11.2017 DE 102017125986
(43) Veröffentlichungstag der Anmeldung: 08.05.2019
(73) Patentinhaber: Theegarten-Pactec GmbH & Co. KG, 01237 Dresden (DE)
(72) Erfinder: Rieck, Ronald, 01187 Dresden (DE); Oehlert, Volker, 01809 Dohna (DE)
(74) Vertreter: Grünecker Patent- und Rechtsanwälte PartG mbB

(56) Entgegenhaltungen:
- EP-A1- 3 175 976
- EP-A1- 3 466 665
- EP-A2- 0 458 764
- WO-A1-2017/130436
- JP-A- H 054 218
- US-A1- 2003 072 799

## Beschreibung

Die Erfindung betrifft ein Verfahren zum Transportieren und Verpacken von Komprimaten, beispielsweise von Brühwürfeln, Presslingen oder Waschtabs, die in einer Herstelleinrichtung produziert und mittels einer Verpackungsmaschine verpackt werden, wobei die Herstelleinrichtung eine Presse zum Komprimieren von Schüttgut, bevorzugt eine Matrizenpresse, und einen Separator aufweist, der die Komprimate an eine Transporteinrichtung übergibt, um die Komprimate zu der Verpackungsmaschine zu transportieren. Darüber hinaus betrifft die Erfindung ein Verfahren zum Herstellen und Verpacken von Komprimaten aus einem Schüttgut, beispielsweise von Brühwürfeln, Presslingen oder Waschtabs, eine Einrichtung zum Herstellen, Transportieren und Verpacken von Komprimaten mit einer solchen Transporteinrichtung für Komprimate sowie deren Verwendung und ein Verfahren zum Herstellen und Verpacken von Komprimaten aus einem Schüttgut.

Herkömmliche Produktionseinheiten zum Herstellen von Komprimaten aus einem Schüttgut mittels einer Matrizenpresse und einer nachgelagerten Verpackung der Komprimate, beispielsweise von Brühwürfeln oder Waschtabs, nutzen üblicherweise eine Transporteinrichtung, bei der die in der Presse produzierten Komprimate über eine Rutsche und/oder ein Zuführband in einen Pufferspeicher gefördert werden, von dem aus die Komprimate vereinzelt an die Verpackungsmaschinen übergeben werden. Das Aufstauen der Komprimate im Puffer ermöglicht eine Entkopplung der Herstellung von der Verpackung der Komprimate und damit einen gleichmäßigen Betrieb der Verpackungsmaschine. Die Druckschrift DE 34 03 851 A1 beschreibt beispielsweise eine Transporteinrichtung, bei der die Produkte von einer Herstelleinrichtung aus auf einem glatten sich kontinuierlich bewegenden Förderband in einen Puffer gefördert werden, von dem aus sie einzeln an eine Verpackungsmaschine übergeben werden. Die Druckschrift EP 3 175 976 A1 offenbart eine Matrizenpresse mit einer Abzugseinrichtung, wobei die Drehscheibe der Abzugseinrichtung die Komprimate in einem Abstand zueinander von der Presse abnimmt und in einem geringeren Abstand an eine langsamer drehende scheibenförmige Transporteinheit abgibt. Die EP 458 764 A2 offenbart ein Verfahren zum Abziehen und Transportieren von gepressten Tabletten, wobei die auf einem Drehtisch der Tablettenpressmaschine in einer Matrize von zwei Stempeln hergestellten Tabletten von einer drehbaren Scheibe mit mehreren Aussparungen von den Matrizenöffnungen abgezogen und mittels der Drehbewegung der Scheibe zu einer Auswurfstation transportiert werden, von der aus die Tabletten über Abführkanäle unsortiert in einen Sammelbehälter fallen. Insbesondere offenbart die EP 0 458 764 A2 ein Verfahren gemäß dem Oberbegriff des Anspruchs 1, ein Verfahren gemäß dem Oberbegriff des Anspruchs 5 sowie eine Einrichtung gemäß dem Oberbegriff des Anspruchs 9.

Die im Stand der Technik bei der Herstellung und Verpackung von Komprimaten eingesetzten Transporteinrichtungen nutzen beispielsweise eine Vakuumunterstützung zur Positionierung und sicheren Anlage der Komprimate auf den Transportbändern, aber auch zur Vereinzelung und Ausrichtung der Komprimate bei der Übergabe an die Verpackungsmaschine, um eine hohe Vereinzelungsgeschwindigkeit zu erzielen. Beginnend mit dem Aufstauen der Komprimate im Auflaufpuffer der Transporteinrichtung ergibt sich durch den beabsichtigen und unbeabsichtigten Kontakt der Komprimate miteinander, aber auch durch die Abbremsung der Komprimate gegenüber dem sich schneller bewegenden Transportband der Transporteinrichtung ein Abrieb und Abstoßen der Komprimate, insbesondere im Kantenbereich. Weiterhin müssen die Komprimate zur Übergabe an die Verpackungsmaschine aus dem Bereich des Auflaufpuffers wieder beschleunigt werden, normalerweise in der Bewegungsrichtung der Transporteinrichtungen, aber gelegentlich auch lateral dazu, was neben einem zusätzlichen Abrieb und der Gefahr von Abbrüchen im Kantenbereich auch die Anzahl der an die Verpackungsmaschine übergebbaren Komprimate pro Zeiteinheit begrenzt. Da mit einer steigenden Beschleunigung der Komprimate aus dem Auflaufpuffer zur Übergabe an die Verpackungsmaschine der Abrieb und die Gefahr von Kantenbrüchen überproportional ansteigt, lassen sich mit herkömmlichen Transporteinrichtungen bei Falteinschlagmaschinen bis ca. 900 Komprimate pro Minute und bei Flowpack-Maschinen bis ca. 1500 Komprimate pro Minute transportieren und dann auch verpacken. Andere Verfahren einer Stauvereinzelung basieren darauf, dass das jeweils zu vereinzelnde Produkt quer aus dem Stau herausgeschoben wird. Auch dies erfordert eine hohe Festigkeit der Komprimate. Um eine größere Anzahl von Komprimaten pro Minute zu verpacken, werden daher mehrere Transporteinrichtungen parallel angeordnet, um die Komprimate zur Verpackungsmaschine zu transportieren.

Eine große Anzahl der Transporteinrichtungen zum Zuführen und Übergeben von Komprimaten an Verpackungsmaschinen, beispielsweise bei der Herstellung von Brühwürfeln oder Waschtabs, nutzen eine Vakuumunterstützung, um die Komprimate auf der Transporteinrichtung anzuordnen und in einer bestimmten Position zu halten, aber auch, um eine hohe Produktbeschleunigung zu erreichen und den Abrieb bei der Beschleunigung zur Weiterführung und Übergabe an die Verpackungsmaschine zu reduzieren. Die Begrenzung des Abriebs und der Bruchkanten an Komprimaten mittels einer derartigen vakuumunterstützten Synchronisation sichert dabei nicht nur eine hohe Qualität der jeweiligen Produkte, sondern verringert auch die Verschmutzung der Transporteinrichtung und notwendige Stillstandzeiten zur Reinigung.

Trotz dieser im Stand der Technik umgesetzten Optimierungen ergibt sich bei herkömmlichen Verfahren und Vorrichtungen zum Transportieren von Komprimaten, beginnend mit dem Aufstauen der Komprimate, beispielsweise Brühwürfel oder Waschtabs, im Auflaufpuffer eine Produktbelastung an der Auflagefläche. Weiter werden gerade sensible Komprimate durch das Aufeinanderstoßen, insbesondere an den Kanten und Auflageflächen, belastet. Die hierbei zum Transportieren von Komprimaten eingesetzte Vakuumunterstützung zur gezielten Positionierung der Komprimate und Synchronisation mit der Verpackungsmaschine, befindet sich speziell für reibungs- und druckempfindliche Komprimate, wie beispielsweise Brühwürfel, bei den aktuell erreichten Transportzahlen hinsichtlich der Konsistenz und geometrischen Formkonstanz im Grenzbereich, wobei insbesondere Übergänge zwischen verschiedenen Komponenten der Transporteinrichtung zu Belastungen und Einschränkungen in der Produktion führen. Darüber hinaus führt der Einsatz von Vakuumsystemen beim Transportieren von Komprimaten zu einer hohen Lärmemission und einem hohen Energieverbrauch. Außerdem ist ein hoher technischer Aufwand erforderlich und die Vakuumkanäle müssen aufgrund der Verschmutzung häufig gereinigt werden.

Der vorliegenden Erfindung liegt daher die Aufgabe zugrunde, ein Verfahren und eine Einrichtung zum Herstellen, Transportieren und Verpacken von Komprimaten bereitzustellen, die eine sichere und produktschonende Übergabe der Komprimate von der Herstelleinrichtung an die Verpackungsmaschine ermöglicht.

Diese Aufgabe wird erfindungsgemäß durch ein Verfahren zum Transportieren und Verpacken von Komprimaten gemäß Anspruch 1 und ein Verfahren zum Herstellen und Verpacken von Komprimaten aus einem Schüttgut gemäß Anspruch 5 sowie durch eine zugehörige Einrichtung zum Herstellen, Transportieren und Verpacken von Komprimaten gemäß Anspruch 9 und deren Verwendung gelöst. Hierzu übergibt der Separator der Herstelleinrichtung die Komprimate vereinzelt an die Transporteinrichtung, wobei der Separator die Komprimate in einem Abstand zueinander an die Transporteinrichtung abgibt, die Transporteinrichtung die Komprimate im Abstand zueinander in kontrollierter Folge zur Verpackungsmaschine transportiert und die Komprimate taktsynchron zur Platzierung der Komprimate auf der Transporteinrichtung von der Transporteinrichtung an die Verpackungsmaschine übergeben werden. Ein solcher kontinuierlicher Transport der Komprimate innerhalb der Transporteinrichtung zwischen Herstelleinrichtung und Verpackungsmaschine, reduziert den Abrieb an den Komprimaten, die Verschmutzung der Transporteinrichtung und den Bauraum, da ein kontinuierlicher Transport in der Transporteinrichtung ohne einen Auflaufpuffer zur gesteuerten Versorgung der Verpackungsmaschine auskommt und somit auch keine Abbremsung beim Auflaufen der Komprimate in den Puffer und keine Beschleunigung bei der gezielten Übergabe der Komprimate aus dem Auflaufpuffer an die Verpackungsmaschine entsteht. Als Komprimate werden hierbei mittels einer Presse durch das Komprimieren von Schüttgut geformte Produkte angesehen. Dabei können in einer solchen Presse, bevorzugt einer Matrizenpresse, sowohl kohäsionslose (frei fließende) Schüttgüter, beispielsweise Waschmittel oder pulverförmige Nahrung und Nahrungsergänzungsmittel, aber auch kohäsive (zusammenhaltende) Schüttgüter, beispielsweise getrocknete Brühe oder Waschtabs, zu einem Produkt mit einer konturierten Form komprimiert werden, wobei gerade im Bereich der Nahrungsmittel Komprimate oftmals druckempfindlich und abriebgefährdet sind. Durch den kontinuierlichen, taktsynchronen Transport der Komprimate von der Herstelleinrichtung zur Verpackungsmaschine wird entsprechend auf einen Auflaufpuffer zur Versorgung der Verpackungsmaschine verzichtet. Stattdessen wird synchron zur Platzierung der vereinzelt angeordneten Komprimate, d.h. eines einzelnen oder einer sehr geringen Zahl definiert übergebener Komprimate, diese von der Transporteinrichtung kontinuierlich und in dem durch die Abgabe des Separators an die Transporteinrichtung vorgegebenen Abstand zueinander zur Verpackungsmaschine transportiert und dort synchron zum Takt der Platzierung der Komprimate auf der Transporteinrichtung an die Verpackungsmaschine übergeben, d.h. die Übergabe der Komprimate vom Separator an die Transporteinrichtung definiert gleichzeitig den in der Zukunft liegenden Moment der Übergabe an die Verpackungsmaschine. Die nachvollziehbare Kopplung zwischen der Abgabe der Komprimate an die Transporteinrichtung und der Übergabe an die Verpackungsmaschine ermöglicht eine höhere Dynamisierung des Transports der Komprimate an die Verpackungsmaschine, um mittels der Synchronisierung des Takts der Herstellung und Verpackung mit dem Transport in der Transporteinrichtung einen deutlichen Anstieg der transportierbaren Komprimate auf über 2.000 Stück pro Minute, bevorzugt auf über 3.000 Stück pro Minute, zu erzielen. Auch kann bei diesem erfindungsgemäßen Verfahren zum Transportieren von Komprimaten auf eine Vakuumunterstützung des Transports in und der Übergabe von der Transporteinrichtung verzichtet werden, wodurch der Energieverbrauch und die Lärmemission beim Transport von Komprimaten deutlich reduziert werden kann. Im Weiteren gestaltet sich eine derartige Kopplung deutlich einfacher und führt zu einer höheren Effizienz.

Eine sinnvolle Ausbildung sieht vor, dass die Transporteinrichtung einen beliebigen Höhenunterschied und/oder eine beliebige Entfernung zwischen der Herstelleinrichtung und der Verpackungsmaschine überbrückt. Dies ermöglicht eine beliebige positionsunabhängige Kopplung von Herstelleinrichtung und Verpackungsmaschine und somit einen Einsatz des Verfahrens zum Transportieren von Komprimaten auch in bestehenden Produktionseinrichtungen und für unterschiedliche Anwendungsfälle. Bevorzugt kann dabei ein Antrieb der Transporteinrichtung mit einem Antrieb der Herstelleinrichtung oder der Verpackungsmaschine gekoppelt sein. Eine solche Kopplung der Antriebe, gegebenenfalls mit einer festen Übersetzung, ist sowohl mechanisch als auch elektrisch möglich und bietet eine einfache Umsetzung des kontinuierlichen Transports der Komprimate und taktsynchronen Übergabe an die Verpackungsmaschine. Alternativ kann der Antrieb der Transporteinrichtung durch einen eigenen Servoantrieb erfolgen, der synchron zur Herstelleinrichtung bzw. zur Verpackungsmaschine die Transporteinrichtung antreibt.

Erfindungsgemäß weist die Transporteinrichtung ein umlaufendes Nockenband oder ein umlaufendes Mitnehmerband auf. Ein derartiges Nockenband oder Mitnehmerband besteht bevorzugt aus einem Tragband, insbesondere mit einer Armierung, in dem einfache vom Tragband vorstehende Nocken oder speziell geformte Mitnehmer das Tragband in Abschnitte unterteilen. Diese Mitnehmer können beispielsweise aufgeklebt, aufgeschweißt, angegossen, anvulkanisiert oder aufgeschraubt sein. Statt einem Tragband mit vorstehenden Nocken oder Mitnehmern kann auch eine Mitnehmerkette mit entsprechend ausgebildeten Mitnehmern eingesetzt werden, wobei jeder Mitnehmer auch einzeln bewegt oder angetrieben werden kann. Ebenso ist auch der Einsatz einer Transportschnecke möglich sofern die Komprimate ausreichend reibungsstabil sind oder die Mitnehmer für einen reibungsarmen Transport ausgebildet sind. Eine Transporteinrichtung mit einem umlaufenden Nockenband oder Mitnehmerband, bzw. einer Mitnehmerkette oder einer Transportschnecke sichert den vereinzelten Transport der in kontrollierter Folge und im Abstand zueinander angeordneten Komprimate in der Transporteinrichtung, da die Nocken oder Mitnehmer, auch bei einem entsprechenden Widerstand gegenüber dem Komprimat, ein Zusammenschieben der Komprimate verhindern. Von Vorteil ist es, wenn der Separator die Komprimate vor einem ersten Nocken oder Mitnehmer eines umlaufenden Nockenbands oder Mitnehmerbands abgibt und nachfolgende Komprimate in kontrollierter Folge und in einem Abstand zum ersten Komprimat vor entsprechend nachfolgende Nocken oder Mitnehmern abgibt. Dabei können die Mitnehmer am umlaufenden Mitnehmerband oder Mitnehmerkette eine variable oder feste Teilung aufweisen. Weiterhin ist es auch möglich, innerhalb der Transporteinrichtung jeden einzelnen Mitnehmer individuell anzutreiben, beispielsweise durch Linear-Servosysteme mit einer Vielzahl von Movern. Dies ist zwar technisch aufwendiger, ermöglicht aber eine variablere Kopplung der Produktion und der Verpackung der Komprimate unter Beibehaltung einer eineindeutigen Position eines jeden einzelnen Komprimates beim Transport von der Herstelleinrichtung zur Verpackungsmaschine.

Um die Komprimate sicher im Abstand zueinander zu transportieren, kann die Transporteinrichtung eine Führungseinrichtung aufweisen, um die Komprimate beim Transport zwischen der Herstelleinrichtung und der Verpackungsmaschine auf dem umlaufenden Nockenband, dem umlaufenden Mitnehmerband oder der umlaufenden Mitnehmerkette zu positionieren. Dies sichert auch bei einem Abheben der Komprimate von der Transporteinrichtung, beispielsweise bei großen Steigungen, Umlenkungen und Überkopfführungen, einen kontinuierlichen, beabstandeten und taktsynchronen Transport der Komprimate zur Verpackungsmaschine. Die Führungseinrichtung ermöglicht auch bei einem Überkopftransport der Komprimate einen Verzicht auf eine Vakuumunterstützung.

Die vorliegende Erfindung betrifft weiter ein Verfahren zum Herstellen und Verpacken von Komprimaten aus einem Schüttgut, beispielsweise von Brühwürfeln, Presslingen oder Waschtabs, umfassend:
Komprimieren des Schüttguts in einer Matrizenpresse,
Abnehmen der Komprimate an der Matrizenpresse mittels eines Separators,
vereinzeltes Übergeben der Komprimate an eine Transporteinrichtung, wobei der Separator die Komprimate in einem Abstand zueinander an die Transporteinrichtung abgibt, und
wobei die Transporteinrichtung ein umlaufendes Nockenband, ein umlaufendes Mitnehmerband, eine umlaufende Mitnehmerkette oder eine Transportschnecke aufweist,
Transportieren der Komprimate mit der Transporteinrichtung zu einer Verpackungsmaschine, wobei die Komprimate im Abstand zueinander in kontrollierter Folge zu der Verpackungsmaschine transportiert werden,
Übergeben der Komprimate an die Verpackungsmaschine, wobei die Komprimate auflaufpufferfrei und taktsynchron von dem Separator an die Transporteinrichtung und von der Transporteinrichtung an die Verpackungsmaschine übergeben werden,
Verpacken der Komprimate in der Verpackungsmaschine.

Ähnlich wie beim Transportieren von Komprimaten ermöglicht das erfindungsgemäße Verfahren zum Herstellen von Komprimaten durch die taktsynchrone Übergabe der Komprimate eine problemlose Dynamisierung der Herstellung und Erhöhung der Produktionsleistung. Der kontinuierliche Transport der in einem Abstand zueinander vereinzelt auf der Transporteinrichtung angeordneten Komprimate vermeidet die in herkömmlichen Herstellverfahren üblichen Auflaufspeicher mit entsprechendem Abrieb und Bruchkanten an den Komprimaten durch die Abbremsung und anschließende Beschleunigung bei der Überführung an die Verpackungsmaschine. Durch die taktsynchrone Übergabe vom Separator an die Transporteinrichtung, den kontinuierlichen Transport mittels der Transporteinrichtung und die taktsynchrone Übergabe an die Verpackungsmaschine, wird bis auf Geschwindigkeitsunterschiede beim Übergeben vom Separator an die Transporteinrichtung und von der Transporteinrichtung an die Verpackungsmachine die Komprimate in der Transporteinrichtung im Wesentlichen beschleunigungsfrei transportiert. Neben der sich daraus ergebenden separaten Führung der Komprimate in der Transporteinrichtung und der Vermeidung von Abrieb an den Komprimaten und von Verschmutzung der Transporteinrichtung, ermöglicht dies zusammen mit der Synchronisierung der Herstellung und Verpackung der Komprimate eine deutliche Steigerung der Produktionsleistung.

Eine besondere Ausgestaltung sieht vor, dass der Separator als eine Greifereinheit mit einem Haltebackenpaaar ausgebildet ist, wobei die beiden Haltebacken des Haltebackenpaares die Komprimate an der Matrizenpresse aktiv übernehmen und an die Transporteinrichtung übergeben. Mittels einer derartigen Greifereinheit können Höhen- und Neigungsunterschiede zwischen der Matrizenpresse und der Transporteinrichtung über die geneigte Anstellung der zugehörigen Hebelarme und die Schrägstellung des Haltebackenpaares kompensiert werden. Darüber hinaus kann der Einfluss unterschiedlicher Geschwindigkeiten beim Abzug der Komprimate an der Matrizenpresse und beim Transport mittels der Transporteinrichtung reduziert werden. Bevorzugt kann der Separator als ein Stegband ausgebildet sein. Die Ausgestaltung des Separators als Stegband wird insbesondere dann eingesetzt, wenn zwei oder vier Komprimate gleichzeitig in der Matrizenpresse geformt werden und in zwei Spuren von dem Stegband vereinzelt an die Transporteinrichtung übergeben werden sollen. Alternativ kann der Separator als ein Indexrad ausgebildet sein, was insbesondere für einzelne an der Matrizenpresse geformte Komprimate bekannt ist und eine einfache Kopplung der Antriebe von Separator und Transporteinrichtung ermöglicht.

Erfindungsgemäß weist die Transporteinrichtung ein umlaufendes Nockenband, ein umlaufendes Mitnehmerband oder eine umlaufende Transportkette auf. Ein entsprechendes Transportband besteht üblicherweise aus einem Tragband mit einer Gewebeverstärkung aus Aramidfasern und weist aufgeklebte, aufgeschweißte, angegossene, anvulkanisierte oder aufgeschraubte Nocken aus einem entsprechendem Kunststoff oder Metall oder speziell geformten Mitnehmer auf. Ein solches umlaufendes Nockenband oder Mitnehmerband ermöglicht eine separate, berührungsfreie Anordnung der Komprimate auf der Transporteinrichtung, um diese kontinuierlich und taktsynchron zur Verpackungsmaschine zu transportieren und dort an die Verpackungsmaschine zu übergeben. Weiter dienen die Nocken und Mitnehmer dazu, beim Vorsehen einer Führungseinrichtung die Komprimate sicher und separat auf dem Nocken- oder Mitnehmerband und der Führungseinrichtung zu halten und zu transportieren. Mittels einer solchen Führungseinrichtung kann auch bei einer starken Neigung, Umlenkung oder Führung der Komprimate über Kopf in der Transporteinrichtung auf eine Vakuumunterstützung verzichtet werden.

Um die bei einem Produktwechsel oder einer veränderten Zusammensetzung des Schüttguts entstehenden Mischprodukte oder fehlerhafte Produkte oder zur Produkte zur Kontrolle von einer Übergabe an die Verpackungsmaschine auszuschließen, kann die Transporteinrichtung eine Ausschleusstation aufweisen, wobei die Ausschleusstation ein Entfernen von Komprimate aus der Transporteinrichtung ermöglicht. So kann neben der Einsparung des Verpackungsmaterials auch eine entsprechende Abnutzung und Verschmutzung der Verpackungsmaschine vermieden werden, aber auch ein unbeabsichtigter Vertrieb von vermischten oder fehlerhaften Produkten.

Die vorliegende Erfindung betrifft weiter eine Einrichtung zum Herstellen, Transportieren und Verpacken von Komprimaten mit einer Herstelleinrichtung für Komprimate, beispielsweise für Brühwürfel, Presslinge oder Waschtabs, die in einer Presse, insbesondere einer Matrizenpresse, aus einem komprimierten Schüttgut hergestellt sind, einer Transporteinrichtung und einer kontinuierlich arbeitenden Verpackungsmaschine zum Verpacken der Komprimate, wobei ein der Presse zugeordneter Separator vorgesehen ist, der im Betrieb die Komprimate von der Presse übernimmt und an die Transporteinrichtung übergibt, wobei die Transporteinrichtung ein umlaufendes Nockenband, ein umlaufendes Mitnehmerband, eine umlaufende Mitnehmerkette oder eine Transportschnecke aufweist, und wobei die Transporteinrichtung geeignet ist, die von dem Separator zugeführten Komprimate vereinzelt und in einem Abstand zueinander zu übernehmen und an die Verpackungsmaschine zu übergeben, wobei die Transporteinrichtung im Betrieb die Komprimate im Abstand zueinander in kontrollierter Folge zur Verpackungsmaschine transportiert, und die Komprimate taktsynchron zur Übernahme der Komprimate an die Transporteinrichtung und auflaufpufferfrei an die Verpackungsmaschine übergibt, um die Komprimate in der Verpackungsmaschine zu verpacken. Eine derartige Transporteinrichtung ermöglicht über die taktsynchrone Kopplung zwischen der Herstellung und der Verpackung von Komprimaten einen kontinuierlichen hochdynamischen Transport der Komprimate und damit eine hohe Produktionsleistung. Durch den möglichen Entfall der Vakuumunterstützung kann auch der Energieverbrauch der Transporteinrichtung maßgeblich gesenkt und die akustischen Emissionen der Tarnsporteinrichtung deutlich reduziert werden. Die vereinzelte, kontinuierliche Übernahme von Komprimaten und deren Transport zur Verpackungsmaschine mittels der vorliegenden Erfindung, wobei ein im Wesentlichen beschleunigungsfreier Transport in der Transporteinrichtung ohne Auflaufpuffer den Abrieb und die dynamische Belastung der Komprimate verringert, ermöglicht überhaupt erst die schnelle Verarbeitung von sehr empfindlichen und leicht verformbaren Produkten.

Weiter betrifft die Erfindung die Verwendung einer solchen Einrichtung zum Herstellen, Transportieren und Verpacken von Komprimaten für ein zuvor beschriebenes Verfahren zum Transportieren und Verpacken von Komprimaten in einer Verpackungsmaschine, wobei die Transporteinrichtung ein umlaufendes Nockenband, ein umlaufendes Mitnehmerband, eine umlaufende Mitnehmerkette oder eine Transportschnecke aufweist, wobei die Transporteinrichtung die von dem Separator zugeführten Komprimate vereinzelt und in einem Abstand zueinander übernimmt, die Komprimate im Abstand zueinander in kontrollierter Folge zur Verpackungsmaschine transportiert und die Komprimate taktsynchron zur Übernahme der Komprimate an die Transporteinrichtung und auflaufpufferfrei an die Verpackungsmaschine übergibt, um die Komprimate in der Verpackungsmaschine zu verpacken.

Im Folgenden wird eine Ausführungsform der Erfindung anhand von Zeichnungen näher erläutert. Es zeigen:
- Fig. 1: eine perspektivische Prinzipansicht einer Transporteinrichtung für Komprimate,
- Fig. 2: eine perspektivische Prinzipansicht einer weiteren Transporteinrichtung für Komprimate,
- Fig. 3: eine perspektivische Ansicht einer Einrichtung zum Herstellen, Transportieren und Verpacken von Komprimaten in einer kontinuierlich arbeitende Verpackungsmaschine und
- Fig. 4: eine perspektivische Ansicht einer weiteren Einrichtung zum Herstellen, Transportieren und Verpacken von Komprimaten in einer intermittierend arbeitende Verpackungsmaschine.

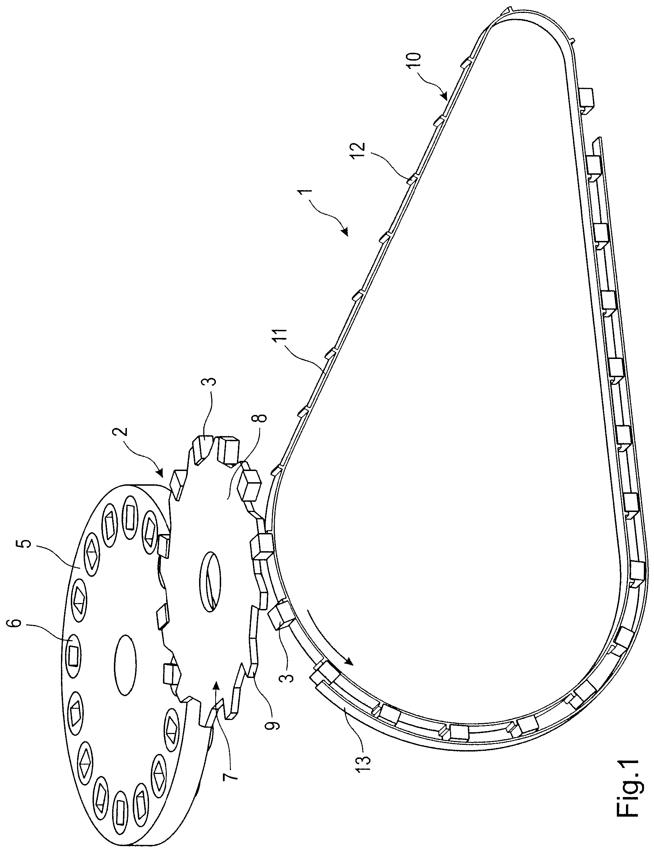

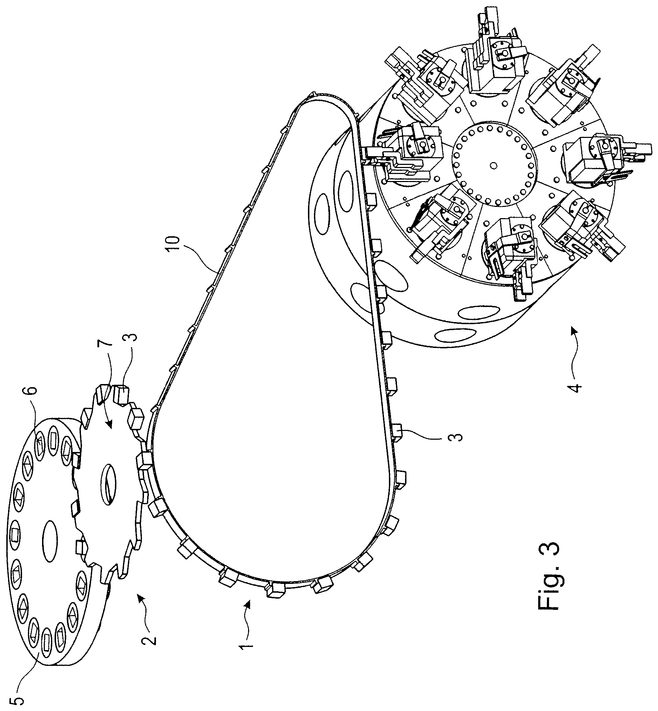

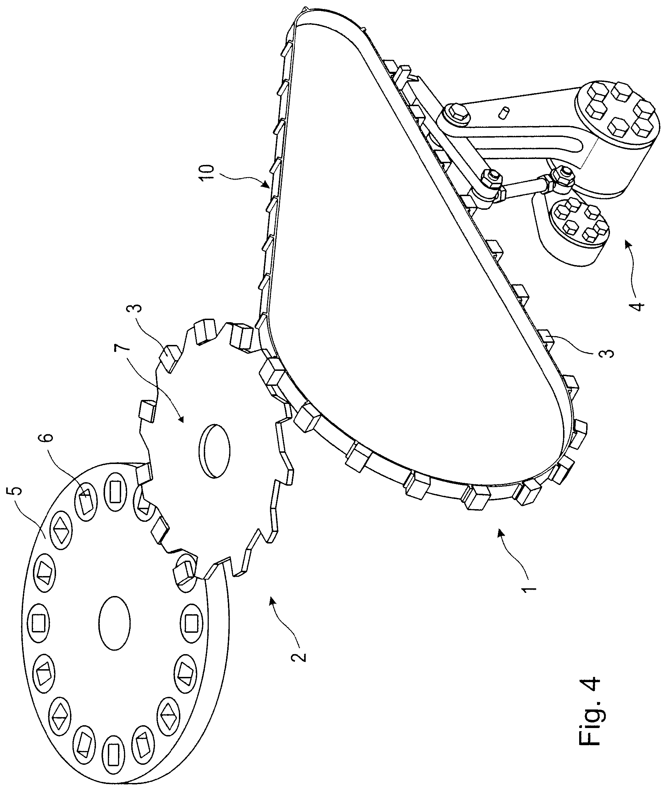

Mit der in Fig. 1 dargestellten Prinzipansicht einer Transporteinrichtung 1 lassen sich die von einer Herstelleinrichtung 2 produzierten Komprimate 3 taktsynchron an eine entsprechende Verpackungsmaschine 4 (siehe Fig. 3 und 4) transportieren. Die Komprimate 3 werden in der Herstelleinrichtung 2 aus einem kohäsionslosen Schüttgut, beispielsweise für die Herstellung von Waschtabs oder Presslingen, oder kohäsiven Schüttgütern, beispielsweise für Brühwürfel oder Schokoladenprodukte, in eine vorgegebene Form gepresst, bevorzugt mittels einer Matrizenpresse. Die Prinzipansicht der Herstelleinrichtung 2 in Fig. 1 zeigt eine kontinuierlich umlaufende Matrizenscheibe 5, in der das in die einzelnen Matrizen 6 gefüllte Schüttgut durch kontinuierlich zur Matrizenscheibe 5 umlaufende Pressenstempel (nicht gezeigt) in die vorgegebene Form der Komprimate 3 gepresst wird. Dabei kann sowohl eine Kombination von kontinuierlich mit der Matrizenscheibe 5 umlaufenden Ober- und Unterstempeln oder nur Unterstempel eingesetzt werden. Zur Abgabe der Komprimate 3 aus den einzelnen Matrizen 6 der Matrizenscheibe 5 werden die Komprimate 3 von einem zugeordneten Unterstempeln (nicht gezeigt) nach oben aus den einzelnen Matrizen 6 herausgeschoben, bis das Komprimat 3 an der Oberseite der Matrizenscheibe 5 bündig zur Oberkante der Matrize 6 liegt. Während der letzten Phase des Ausschiebens der Komprimate 3 aus der Matrize 6 wird ein Separator 7 über die Oberseite der Matrizenscheibe 5 geführt, um die Komprimate 3 sicher an der Matrize 6 zu übernehmen und an die Transporteinrichtung 1 zu übergeben. Der Separator 7 ist in der in Fig. 1 gezeigten Prinzipansicht der Herstelleinrichtung 2 als Indexscheibe 8 ausgebildet, das über entsprechend ausgebildete Indexzähne 9 einzelne an die Matrize 6 vorstehende Komprimate 3 von der Matrizenscheibe 5 abschiebt und über eine Drehbewegung an die Transporteinrichtung 1 übergibt.

Die Transporteinrichtung 1 umfasst ein Transportband 10, auf dem der Separator 7 die Komprimate 3 taktsynchron zum Abziehen der Komprimate 3 an der Matrizenscheibe 5 abgibt und auf dem die vereinzelt angeordneten Komprimate 3 kontinuierlich und in einem Abstand zueinander in Pfeilrichtung zur Verpackungsmaschine 4 transportiert werden. In der in Fig. 1 dargestellten Prinzipansicht der erfindungsgemäßen Transporteinrichtung 1 für Komprimate 3 ist das Transportband 10 als ein umlaufendes Mitnehmerband 11 ausgebildet, in dem speziell ausgeformte Mitnehmer 12 in das hier aus verstärkten Polyesterfäden gewebten Mitnehmerband 11 aufgesetzt sind.

Beim taktsynchronen Platzieren der Komprimate 3 auf dem Mitnehmerband 11 kann es zur Angleichung der Ausrichtung der mittels dem Indexrad 8 kreisförmig zugeführten Komprimate 3 zu einer geringen Beschleunigung der Komprimate 3 kommen, die abhängig ist von der Anordnung des Indexrads 8 und des Mitnehmerbands 11 zueinander sowie einer möglichen Übersetzung des Transportbands 10 gegenüber dem Separator 7. Im weiteren Verlauf liegen die Komprimate 3 an den Mitnehmern 12 des Mitnehmerbands 11 an und werden vom Mitnehmerband 11 direkt zur Verpackungsmaschine 4 transportiert, wobei hier erfindungsgemäß kein Auflaufpuffer für die Komprimate 3 vorgesehen ist, sondern die Komprimate 3 taktsynchron zur Platzierung auf der Transporteinrichtung 1 von der Transporteinrichtung 1 an die Verpackungsmaschine 4 übergeben werden. Zwar kann neben dem Moment der Abgabe der Komprimate 3 an das Transportband 10 auch bei einer Umlenkung des Transportbandes 10 und einer Führung der Komprimate 3 mittels der Mitnehmer 12 eine absolute Beschleunigung auf die Komprimate 3 wirken, jedoch ist der kontinuierliche, im Abstand zueinander angeordnete und taktsynchrone Transport entlang der Transporteinrichtung 1 sowie die Übergabe der Komprimate 3 an die Verpackungsmaschine 4 als beschleunigungsfrei anzusehen, gegenüber einem herkömmlichen Verfahren zum Transportieren von Komprimaten 3 mit einer ungesteuerten Zuführung der Komprimate 3 zu einem Auflaufpuffer, in dem die Komprimate 3 abgebremst werden, und die beschleunigte vereinzelte Zuführung der Komprimate 3 zur Verpackungsmaschine 4 aus diesem Auflaufpuffer. Andere Verfahren zum Transportieren von ungesteuert zugeführten Komprimaten 3 nutzen bauraum- und reibungsintensive Bandpuffer.

Da beim Transport der Komprimate 3 mittels des Mitnehmerbands 11 die Komprimate 3 zunächst an der Umlenkung des Transportbands 10 stark geneigt und schlussendlich über Kopf auf dem Mitnehmerband 11 in Richtung der Verpackungsmaschine 4 transportiert werden, ist in der Prinzipansicht der Transporteinrichtung 1 in Fig. 1 eine entsprechend der Umlenkung des Transportbands 10 ausgebildete Führungsschiene 13 vorgesehen. In alternativen Ausführungsformen können andere Bewegungsbahnen des Mitnehmerbands 11, beispielsweise mit S-förmigen Kurven, eingesetzt werden, um einen Höhenunterschied ohne eine Führungsschiene 13 zu überwinden. Die Führungsschiene 13 ermöglicht in der erfindungsgemäßen Transporteinrichtung 1 aus Fig. 1 einen vakuumfreien Transport der Komprimate 3. Nachdem auch für die vereinzelte Übergabe der Komprimate 3 an das Transportband 10 durch den Separator 7 eine Vakuumunterstützung für die Platzierung der Komprimate 3 auf dem Mitnehmerband 11 nicht notwendig ist, ermöglicht die Führungsschiene 13 weiter den Verzicht auf die Vakuumunterstützung auch für den Transport der Komprimate 3 zur Verpackungsmaschine 4, wodurch neben einer deutlichen Einsparung an Energie für den Betrieb der Transporteinrichtung 1 auch die Geräuschemission der Transporteinrichtung 1 deutlich reduziert werden kann. Die auf dem Mitnehmerband 11 platzierten Komprimate 3 werden stattdessen von den Mitnehmern 12 kontinuierlich und in einem Abstand zueinander zur Verpackungsmaschine 4 geführt, wobei es für den Transport der Komprimate 3 unwesentlich ist, ob die Komprimate 3 beständig am Mitnehmerband 11 anliegen, oder ob sie von den Mitnehmern 12 auch bereichsweise an der Führungsschiene 13 entlanggeführt werden.

Am Ende der in Fig. 1 dargestellten Führungsschiene 13 werden die vom Mitnehmerband 11 an den Mitnehmern 12 transportierten Komprimate 3 taktsynchron zur Platzierung der Komprimate 3 durch das Indexrad 8 auf dem Mitnehmerband 11 an eine Verpackungsmaschine 4 übergeben. Alternativ kann hier auch eine Zuführkette (nicht gezeigt) zu einer Verpackungsmaschine 4 vorgesehen sein, die taktsynchron die Komprimate 3 übernimmt und der Verpackungsmaschine 4, beispielsweise einer Flowpack-Maschine zum Verpacken von Waschtabs, zuführt.

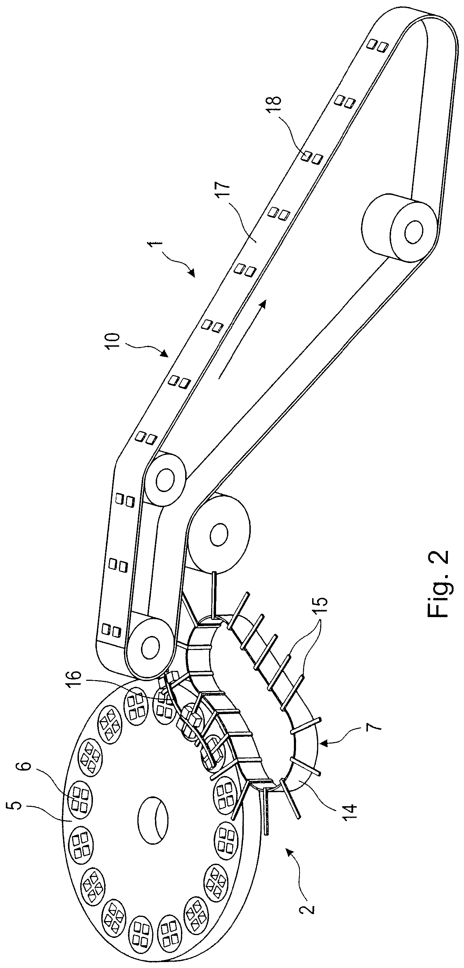

In Fig. 2 ist eine weitere perspektivische Prinzipansicht einer Transporteinrichtung 1 für Komprimate 3 dargestellt. Im Gegensatz zu der Herstelleinrichtung 2 aus Fig. 1 weist diese Matrizenscheibe 5 unterteilte Matrizen 6 auf, die bei einem Pressvorgang vier Einzelkomprimate 3 herstellen. Daher ist auch der Separator 7 dieser Herstelleinrichtung 2 als Stegband 14 ausgebildet mit seitlich vorstehenden Stegen 15, die zwischen die Matrizen 6 der Matrizenscheibe 5 eingreifen und die an der Matrize 6 vom Unterstempel der Presse vorgeschobenen Komprimate 3 in Richtung der Transporteinrichtung 1 transportieren. Dazu greift jeder zweite Steg 15 des Stegbands 14 zwischen die an der Matrize 6 herausgedrückten Komprimate 3 und jeder andere Steg 15 zwischen zwei benachbarte Matrizen 6. Zusammen mit einem Führungssteg 16 werden die aus einer Matrize 6 geformten Komprimate 3 paarweise der Transporteinrichtung 1 zugeführt und als Paar vereinzelt und in einem Abstand zu den nachfolgenden Komprimaten 3 abgegeben.

Die Transporteinrichtung 1 ist in der als Prinzipansicht in Fig. 2 dargestellten Ausführungsform als Nockenband 17 ausgebildet. Das Nockenband 17 ist entgegengesetzt zu dem Mitnehmerband 11 aus Fig. 1 geführt, aber ebenfalls als Tragband aus gewebten, faserverstärkten Polyesterfäden hergestellt. Die Nocken 18 dieses Nockenbands 17 sind als Teil des Tragbands des Nockenbands 17 ausgebildet oder aufgeklebt, aufgeschweißt, angegossen, anvulkanisiert oder aufgeschraubt. Die Nocken 18 führen entsprechend den Mitnehmern 12 in Fig. 1 die Komprimate 3 in einem Abstand zu den nachfolgenden Komprimaten 3 und taktsynchron zur Übergabe der Komprimate 3 an die Transporteinrichtung 1 zur Verpackungsmaschine 4 und werden an der Verpackungsmaschine 4 (nicht gezeigt) taktsynchron von der Transporteinrichtung 1 an die Verpackungsmaschine 4 übergeben. Im Gegensatz zu der Transporteinrichtung 1 aus Fig. 1, die vom Separator 7 einzelne Komprimate 3 übernimmt, werden von dem als Nockenband 17 in Fig. 2 gezeigten Separator 7 jeweils zwei Komprimate 3 gleichzeitig an die Transporteinrichtung 1 übergeben und von dieser taktsynchron und in einem Abstand zum nächsten Paar Komprimate 3 zur Verpackungsmaschine 4 transportiert und dort paarweise übergeben. Auch wenn in der in Fig. 2 dargestellten Herstelleinrichtung 2 und Transporteinrichtung 1 jeweils ein Paar von Komprimaten 3, beispielsweise Brühwürfeln, übergeben und taktsynchron transportiert werden, ist dies im Hinblick auf den bisherigen Stand der Technik als vereinzelt im Sinne der Erfindung anzusehen.

Anstelle der in Fig. 1 und 2 als Mitnehmerband 11 oder Nockenband 17 ausgebildeten Transportband 10 kann auch eine Zuführkette mit entsprechenden Mitnehmern oder mit rotierenden Trägern vorgesehen sein. Entsprechend dem Verfahren zum taktsynchronen Transport der Komprimate 3 sowie deren Platzierung, bzw. Produktion in der Herstelleinrichtung 2, und die taktsynchrone Bereitstellung an der Verpackungsmaschine 4 sind die Antriebe der Presse der Herstelleinrichtung 2 und der Transporteinrichtung 1 sowie gegebenenfalls der Verpackungsmaschine 4 mechanisch und/oder elektrisch gekoppelt, gegebenenfalls mit einer festen Übersetzung, um das taktsynchrone Herstellen, Transportieren und Verpacken von Komprimaten 3 zu erleichtern. Alternativ kann die Synchronität auch über eine gezielte Steuerung eigener Servoantriebe erfolgen.

Alternativ zu dem als Indexrad 8 oder als Stegband 14 ausgebildeten Separator 7 kann auch ein Greifersystem eingesetzt werden, bei dem ein geeigneter Greiferkopf das Komprimat 3 an der Matrize 6 durch Aufgreifen eines Haltebackenpaares aufnimmt und nachfolgend an das Transportband 10 taktsynchron übergibt. Ein derartiger Greiferkopf kann durch eine geneigte Anlenkung der Hebelarme und eine Schrägstellung der Drehachse eine horizontale Übernahme eines Komprimats 3 in eine schräge Abgabe überführen, was die Möglichkeiten der Anordnung der Transporteinrichtung 1 zur Herstelleinrichtung 2 deutlich vergrößert und eine entsprechende Einbindung einer Transporteinrichtung 1 in bestehende Herstelleinrichtungen 2 und zugehörige Verpackungsmaschinen 4 erleichtert.

Fig. 3 zeigt eine perspektivische Ansicht einer Einrichtung zum Herstellen, Transportieren und Verpacken von Komprimaten 3 in einer kontinuierlich arbeitenden Verpackungsmaschine auf Basis der in Fig. 1 gezeigten Transporteinrichtung 1 und Herstelleinrichtung 2. Alternativ zu der in Fig. 1 erläuterten Übergabe der Komprimate 3 am Ende des Transportbands 10 an die Zuführkette einer Flowpack-Maschine, kann am Ende des Transportbands 10 auch direkt eine kontinuierlich arbeitende Verpackungsmaschine 4 angeordnet sein, die beispielsweise mittels kontinuierlich arbeitender Köpfe die Komprimate 3 taktsynchron zur Abgabe der Komprimate 3 mittels des Separators 7 an die Transporteinrichtung 1, die Komprimate 3 übernimmt und mit einer entsprechenden Faltung in ein Packmittel verpackt.

Wie in Fig. 4 dargestellt können als Verpackungsmaschine 4 auch intermittierend arbeitende Einschlagmaschinen genutzt werden.

Die in den Fig. 3 und 4 dargestellten Einrichtungen zum Herstellen, Transportieren und Verpacken von Komprimaten 3 sind entsprechend eines erfindungsgemäßen Verfahrens zum Herstellen und Verpacken von Komprimaten 3 aus einem Schüttgut ausgestaltet. Das Schüttgut wird mittels einer Matrizenpresse in den Matrizen 6 der Matrizenscheibe 5 komprimiert und das Komprimat 3 dann von dem als Indexrad 8 ausgebildeten Separator 7 an der Matrizenscheibe 5 abgenommen, an der die Unterstempel der Matrizenpresse die Komprimate 3 aus den Matrizen 6 bis zur Oberseite der Matrizenscheibe 5 aus der Matrize 6 herausdrücken. Der Separator 7 übergibt die einzelnen Komprimate 3 bzw. Paare von Komprimaten 3 an die Transporteinrichtung 1 taktsynchron zum Abnehmen der Komprimate 3 an der Matrizenscheibe 5. Die Übergabe der Komprimate 3 an das Transportband 10 der Transporteinrichtung 1 erfolgt vereinzelt und in einem Abstand zueinander, da die gekoppelten Antriebe der Herstelleinrichtung 2 und Transporteinrichtung 1 eine synchrone Bewegung des Transportbands 10 zum Separator 7 bewirken. Anschließend werden die Komprimate 3 auf dem Transportband 10 der Transporteinrichtung 1 kontinuierlich im Abstand der vereinzelten Übergabe der Komprimate 3 zu der Verpackungsmaschine 4 transportiert und an der Verpackungsmaschine 4 taktsynchron zur Übergabe der Komprimate 3 vom Separator 7 an das Transportband 10 von der Transporteinrichtung 1 an die Verpackungsmaschine 4 übergeben.

### Bezugszeichenliste

- 1: Transporteinrichtung
- 2: Herstelleinrichtung
- 3: Komprimate
- 4: Verpackungsmaschine
- 5: Matrizenscheibe
- 6: Matrize
- 7: Separator
- 8: Indexrad
- 9: Indexzähne
- 10: Transportband
- 11: Mitnehmerband
- 12: Mitnehmer
- 13: Führungsschiene
- 14: Stegband
- 15: Steg
- 16: Führungssteg
- 17: Nockenband
- 18: Nocken

## Patentansprüche

1. Verfahren zum Transportieren und Verpacken von Komprimaten (3), beispielsweise von Brühwürfeln, Presslingen oder Waschtabs, die in einer Herstelleinrichtung (2) produziert und mittels einer Verpackungsmaschine (4) verpackt werden, wobei die Herstelleinrichtung (2) eine Presse zum Komprimieren von Schüttgut, bevorzugt eine Matrizenpresse, und einen Separator (7) aufweist, der die Komprimate (3) an eine Transporteinrichtung (1) übergibt, um die Komprimate (3) zu der Verpackungsmaschine (4) zu transportieren, wobei der Separator (7) die Komprimate (3) vereinzelt an die Transporteinrichtung (1) übergibt, wobei der Separator (7) die Komprimate (3) in einem Abstand zueinander an die Transporteinrichtung (1) abgibt,
**dadurch gekennzeichnet, dass** die Transporteinrichtung (1) die Komprimate (3) im Abstand zueinander in kontrollierter Folge zur Verpackungsmaschine (4) transportiert, wobei die Transporteinrichtung (1) ein umlaufendes Nockenband (17), ein umlaufendes Mitnehmerband (11), eine umlaufende Mitnehmerkette oder eine Transportschnecke aufweist; die Komprimate (3) taktsynchron zur Platzierung der Komprimate (3) auf der Transporteinrichtung (1) und auflaufpufferfrei von der Transporteinrichtung (1) an die Verpackungsmaschine (4) übergeben werden; und
die Komprimate (3) in der Verpackungsmaschine (4) verpackt werden.

2. Verfahren zum Transportieren und Verpacken von Komprimaten (3) nach Anspruch 1, **dadurch gekennzeichnet, dass** die Transporteinrichtung (1) einen beliebigen Höhenunterschied und/oder eine beliebige Entfernung zwischen der Herstelleinrichtung (2) und der Verpackungsmaschine (4) überbrückt.

3. Verfahren zum Transportieren und Verpacken von Komprimaten (3) nach Anspruch 1 oder 2,
**dadurch gekennzeichnet, dass** ein Antrieb der Transporteinrichtung (1) mit einem Antrieb der Herstelleinrichtung (2) oder der Verpackungsmaschine (4) gekoppelt ist.

4. Verfahren zum Transportieren und Verpacken von Komprimaten (3) nach einem der Ansprüche 1 bis 3,
**dadurch gekennzeichnet, dass** die Transporteinrichtung (1) eine Führungseinrichtung aufweist, um die Komprimate (3) beim Transport zwischen der Herstelleinrichtung (2) und der Verpackungsmaschine (4) auf dem umlaufenden Nockenband (17), dem umlaufenden Mitnehmerband (11), der umlaufenden Mitnehmerkette oder der Transportschnecke zu positionieren.

5. Verfahren zum Herstellen und Verpacken von Komprimaten (3) aus einem Schüttgut, beispielsweise von Brühwürfeln, Presslingen oder Waschtabs, umfassend:
Komprimieren des Schüttguts in einer Matrizenpresse,
Abnehmen der Komprimate (3) an der Matrizenpresse mittels eines Separators (7), vereinzeltes Übergeben der Komprimate (3) an eine Transporteinrichtung (1), wobei der Separator (7) die Komprimate (3) in einem Abstand zueinander an die Transporteinrichtung (1) abgibt, **dadurch gekennzeichnet, dass**
die Transporteinrichtung (1) ein umlaufendes Nockenband (17), ein umlaufendes Mitnehmerband (11), eine umlaufende Mitnehmerkette oder eine Transportschnecke aufweist, wobei das Verfahren außerdem die folgenden Verfahrensschritte umfasst:
Transportieren der Komprimate (3) mittels der Transporteinrichtung (1) zu einer Verpackungsmaschine (4), wobei die Komprimate (3) in Abstand zueinander in kontrollierter Folge zu der Verpackungsmaschine (4) transportiert werden,
Übergeben der Komprimate (3) an die Verpackungsmaschine (4), wobei die Komprimate (3) auflaufpufferfrei und taktsynchron von dem Separator (7) an die Transporteinrichtung (1) und von der Transporteinrichtung (1) an die Verpackungsmaschine (4) übergeben werden,
Verpacken der Komprimate (3) in der Verpackungsmaschine (4).

6. Verfahren zum Herstellen und Verpacken von Komprimaten (3) nach Anspruch 5,
**dadurch gekennzeichnet, dass** der Separator (7) als eine Greifereinheit mit einem Haltebackenpaar ausgebildet ist, wobei die beiden Haltebacken des Haltebackenpaars Komprimate (3) an der Matrizenpresse aktiv übernehmen und an die Transporteinrichtung (1) übergeben.

7. Verfahren zum Herstellen und Verpacken von Komprimaten (3) nach Anspruch 5 oder 6, **dadurch gekennzeichnet, dass** der Separator (7) als ein Stegband (14) ausgebildet ist.

8. Verfahren zum Herstellen und Verpacken von Komprimaten (3) nach einem der Ansprüche 5 bis 7,
**dadurch gekennzeichnet, dass** die Transporteinrichtung (1) eine Ausschleusstation aufweist, wobei die Ausschleusstation ein Entfernen von Komprimaten (3) aus der Transporteinrichtung (1) vor einer Übergabe an die Verpackungsmaschine (4) ermöglicht.

9. Einrichtung zum Herstellen, Transportieren und Verpacken von Komprimaten (3) mit einer Herstelleinrichtung (2) für Komprimate (3), beispielsweise für Brühwürfel, Presslinge oder Waschtabs, die in einer Presse der Herstelleinrichtung (2), insbesondere einer Matrizenpresse, aus einem komprimierten Schüttgut hergestellt werden, einer Transporteinrichtung (1) und einer kontinuierlich arbeitenden Verpackungsmaschine (4) zum Verpacken der Komprimate (3), für ein Verfahren zum Transportieren und Verpacken von Komprimaten (3) nach einem der Ansprüche 1 bis 4, wobei ein der Presse zugeordneter Separator (7) vorgesehen ist, der im Betrieb die Komprimate (3) von der Presse übernimmt und an die Transporteinrichtung (1) übergibt, wobei die Transporteinrichtung (1) geeignet ist die von dem Separator (7) zugeführten Komprimate (3) vereinzelt und in einem Abstand zueinander zu übernehmen und an die Verpackungsmaschine (4) zu übergeben,
**dadurch gekennzeichnet, dass** die Transporteinrichtung (1) ein umlaufendes Nockenband (17), ein umlaufendes Mitnehmerband (11), eine umlaufende Mitnehmerkette oder eine Transportschnecke aufweist, und dass die Transporteinrichtung (1) im Betrieb die Komprimate (3) im Abstand zueinander in kontrollierter Folge zur Verpackungsmaschine (4) transportiert, und die Komprimate (3) taktsynchron zur Übernahme der Komprimate (3) an die Transporteinrichtung (1) und auflaufpufferfrei an die Verpackungsmaschine (4) übergibt, um die Komprimate in der Verpackungsmaschine (4) zu verpacken.

10. Verwendung einer Einrichtung zum Herstellen, Transportieren und Verpacken von Komprimaten (3) nach Anspruch 9, für ein Verfahren zum Transportieren und Verpacken von Komprimaten (3) in einer Verpackungsmaschine (4) nach einem der Ansprüche 1 bis 4.

## Claims

1. Method for transporting and packaging comprimates (3), for example stock cubes, pressed products or washing tablets, which are produced in a manufacturing device (2) and packaged by means of a packaging machine (4), wherein the manufacturing device (2) has a press for compressing bulk material, preferably a die press, and a separator (7) which transfers the comprimates (3) to a transport device (1) in order to transport the comprimates (3) to the packaging machine (4), wherein the separator (7) transfers the comprimates (3) individually to the transport device (1), wherein the separator (7) delivers the comprimates (3) to the transport device (1) at a distance from one another,
**characterised in that** the transport device (1) transports the comprimates (3) at a distance from one another in a controlled sequence to the packaging machine (4), wherein the transport device (1) has a circulating cam belt (17), a circulating carrier belt (11), a circulating carrier chain or a transport screw;
the comprimates (3) are transferred from the transport device (1) to the packaging machine (4) synchronous with the cycle for placing the comprimates (3) on the transport device (1) and without a run-up buffer; and
the comprimates (3) are packaged in the packaging machine (4).

2. Method for transporting and packaging comprimates (3) according to claim 1, **characterised in that** the transport device (1) bridges any height difference and/or any distance between the manufacturing device (2) and the packaging machine (4).

3. Method for transporting and packaging comprimates (3) according to claim 1 or 2, **characterised in that** a drive of the transport device (1) is coupled to a drive of the manufacturing device (2) or the packaging machine (4).

4. Method for transporting and packaging comprimates (3) according to one of claims 1 to 3,
**characterised in that** the transport device (1) has a guide device for positioning the comprimates (3) on the circulating cam belt (17), the circulating carrier belt (11), the circulating carrier chain or the transport screw during transport between the manufacturing device (2) and the packaging machine (4).

5. Method for producing and packaging comprimates (3) from bulk material, for example stock cubes, pressed products or washing tablets, comprising:
compressing the bulk material in a die press,
removing the comprimates (3) from the die press by means of a separator (7), transferring the comprimates (3) individually to a transport device (1),
wherein the separator (7) delivers the comprimates (3) to the transport device (1) at a distance from one another,
**characterised in that** the transport device (1) has a circulating cam belt (17), a circulating drive belt (11), a circulating drive chain or a transport screw, wherein the method further comprising the following method steps:
transporting the comprimates (3) by means of the transport device (1) to a packaging machine (4), wherein the comprimates (3) are transported at a distance from one another in a controlled sequence to the packaging machine (4),
transferring the comprimates (3) to the packaging machine (4), wherein the comprimates (3) are transferred without a run-up buffer and in a synchronous manner from the separator (7) to the transport device (1) and from the transport device (1) to the packaging machine (4),
packaging the comprimates (3) in the packaging machine (4).

6. Method for producing and packaging comprimates (3) according to claim 5,
**characterised in that** the separator (7) is designed as a gripper unit with a pair of holding jaws, wherein the two holding jaws of the pair of holding jaws actively take hold of comprimates (3) at the die press and transfer them to the transport device (1).

7. Method for producing and packaging comprimates (3) according to claim 5 or 6, **characterised in that** the separator (7) is designed as a stud belt (14).

8. Method for producing and packaging comprimates (3) according to one of claims 5 to 7,
**characterised in that** the transport device (1) has a discharge station, wherein the discharge station enables comprimates (3) to be removed from the transport device (1) before being transferred to the packaging machine (4).

9. Device for producing, transporting and packaging comprimates (3) with a manufacturing device (2) for comprimates (3), for example for stock cubes, pressed products or washing tablets, which are produced in a press of the manufacturing device (2), in particular a die press, from a compressed bulk material,
a transport device (1) and a continuously operating packaging machine (4) for packaging the comprimates (3), for a method for transporting and packaging comprimates (3) according to one of claims 1 to 4, wherein a separator (7) associated with the press is provided, which in operation takes the comprimates (3) from the press and transfers them to the transport device (1), wherein the transport device (1) is suitable for receiving the comprimates (3) fed by the separator (7) individually and at a distance from one another and for transferring them to the packaging machine (4),
**characterised in that,** the transport device (1) has a circulating cam belt (17), a circulating carrier belt (11), a circulating carrier chain or a transport screw, and that during operation, the transport device (1) transports the comprimates (3) at a distance from one another in a controlled sequence to the packaging machine (4), and transfers the comprimates (3) to the packaging machine (4) in a synchronous cycle with the transfer of the comprimates (3) to the transport device (1) and without a run-up buffer, in order to package the compacted products in the packaging machine (4).

10. Use of a device for producing, transporting and packaging comprimates (3) according to claim 9, for a method for transporting and packaging comprimates (3) in a packaging machine (4) according to one of claims 1 to 4.

## Revendications

1. Procédé de transport et d'emballage de comprimés (3), par exemple de cubes de bouillon, de granules compressées ou de tablettes de lavage, qui sont produits dans un dispositif de fabrication (2) et emballés au moyen d'une machine d'emballage (4), dans lequel le dispositif de fabrication (2) présente une presse permettant de comprimer des produits en vrac, de manière préférée une presse à matrices, et un séparateur (7) qui transfère les comprimés (3) à un dispositif de transport (1) afin de transporter les comprimés (3) vers la machine d'emballage (4), dans lequel le séparateur (7) transfère les comprimés (3) de manière individualisée au dispositif de transport (1), dans lequel le séparateur (7) délivre les comprimés (3) au dispositif de transport (1) à distance les uns des autres,
**caractérisé en ce que** le dispositif de transport (1) transporte les comprimés (3) à distance les uns des autres dans une séquence contrôlée vers la machine d'emballage (4), dans lequel le dispositif de transport (1) présente une courroie à cames (17) tournante, une courroie d'entrainement (11) tournante, une chaîne d'entraînement tournante ou une vis de transport ; les comprimés (3) sont transférés de manière cadencée et sans tampon d'alimentation depuis le dispositif de transport (1) jusqu'à la machine d'emballage (4) en vue du placement des comprimés (3) sur le dispositif de transport (1) ; et
les comprimés (3) sont emballés dans la machine d'emballage (4).

2. Procédé de transport et d'emballage de comprimés (3) selon la revendication 1, **caractérisé en ce que** le dispositif de transport (1) compense une différence quelconque de hauteur et/ou une distance quelconque entre le dispositif de fabrication (2) et la machine d'emballage (4).

3. Procédé de transport et d'emballage de comprimés (3) selon la revendication 1 ou 2,
**caractérisé en ce qu'un** entraînement du dispositif de transport (1) est couplé à un entraînement du dispositif de fabrication (2) ou de la machine d'emballage (4).

4. Procédé de transport et d'emballage de comprimés (3) selon l'une quelconque des revendications 1 à 3,
**caractérisé en ce que** le dispositif de transport (1) présente un dispositif de guidage afin de positionner les comprimés (3) sur la courroie à cames (17) tournante, la courroie d'entraînement (11) tournante, la chaîne d'entraînement tournante ou la vis de transport lors du transport entre le dispositif de fabrication (2) et la machine d'emballage (4).

5. Procédé de fabrication et d'emballage de comprimés (3), par exemple de cubes de bouillon, de granules compressés ou de tablettes de lavage, à partir d'un matériau en vrac, comprenant les étapes consistant à :
compresser le produit en vrac dans une presse à matrices, retirer les comprimés (3) de la presse à matrices au moyen d'un séparateur (7), transférer de manière individualisée les comprimés (3) à un dispositif de transport (1), dans lequel le séparateur (7) délivre les comprimés (3) au dispositif de transport (1) à distance les uns des autres, **caractérisé en ce que**
le dispositif de transport (1) présente une courroie à cames (17) tournante, une courroie d'entraînement (11) tournante, une chaîne d'entraînement tournante ou une vis de transport, dans lequel le procédé comprend en outre les étapes de procédé ci-dessous :
transporter les comprimés (3) vers une machine d'emballage (4) au moyen du dispositif de transport (1), dans lequel les comprimés (3) sont transportés à distance les uns des autres dans une séquence contrôlée vers la machine d'emballage (4),
transférer les comprimés (3) à la machine d'emballage (4), dans lequel les comprimés (3) sont transférés sans tampon d'alimentation et de manière cadencée depuis le séparateur (7) jusqu'au dispositif de transport (1) et depuis le dispositif de transport (1) jusqu'à la machine d'emballage (4),
emballer les comprimés (3) dans la machine d'emballage (4).

6. Procédé de fabrication et d'emballage de comprimés (3) selon la revendication 5, **caractérisé en ce que** le séparateur (7) est réalisé sous la forme d'une unité de préhension comprenant une paire de mâchoires de retenue, dans lequel les deux mâchoires de retenue de la paire de mâchoires de retenue prennent activement en charge des comprimés (3) au niveau de la presse à matrices et les transfèrent au dispositif de transport (1).

7. Procédé de fabrication et d'emballage de comprimés (3) selon la revendication 5 ou 6, **caractérisé en ce que** le séparateur (7) est réalisé sous la forme d'une courroie à barrettes (14).

8. Procédé de transport et d'emballage de comprimés (3) selon l'une quelconque des revendications 5 à 7,
**caractérisé en ce que** le dispositif de transport (1) présente un poste d'évacuation, dans lequel le poste d'évacuation permet d'éloigner les comprimés (3) du dispositif de transport (1) avant leur transfert à la machine d'emballage (4).

9. Dispositif permettant de fabriquer, transporter et emballer des comprimés (3), comprenant un dispositif de fabrication (2) pour des comprimés (3), par exemple pour des cubes de bouillon, des granules compressés ou des tablettes de lavage, qui sont fabriqués dans une presse du dispositif de fabrication (2), en particulier une presse à matrices, à partir d'un produit en vrac comprimé, un dispositif de transport (1) et une machine d'emballage (4) fonctionnant en continu et permettant d'emballer les comprimés (3), pour un procédé de transport et d'emballage de comprimés (3) selon l'une quelconque des revendications 1 à 4, dans lequel un séparateur (7) associé à la presse est fourni, lequel, en cours de fonctionnement, prend en charge les comprimés (3) de la presse et les transfère au dispositif de transport (1), dans lequel le dispositif de transport (1) est approprié pour prendre en charge, de manière individualisée et à distance les uns des autres, les comprimés (3) amenés par le séparateur (7) et pour les transférer à la machine d'emballage (4)
**caractérisé en ce que** le dispositif de transport (1) présente une courroie à cames (17) tournante, une courroie d'entraînement (11) tournante, une chaîne d'entraînement tournante ou une vis de transport, et **en ce que**
pendant le fonctionnement, le dispositif de transport (1) transporte les comprimés (3) à distance les uns des autres dans une séquence contrôlée vers la machine d'emballage (4), et transfère les comprimés (3) de manière cadencée au dispositif de transport (1) en vue d'une prise en charge des comprimés (3) et les transfère sans tampon d'alimentation à la machine d'emballage (4) afin d'emballer les comprimés dans la machine d'emballage (4).

10. Utilisation d'un dispositif de fabrication, de transport et d'emballage de comprimés (3) selon la revendication 9, pour un procédé de transport et d'emballage de comprimés (3) dans une machine d'emballage (4) selon l'une quelconque des revendications 1 à 4.
